(19) Europäisches Patentamt
European Patent Office
Office européen des brevets

(11) **EP 4 276 549 A1**

(12) **EUROPÄISCHE PATENTANMELDUNG**

(43) Veröffentlichungstag:
**15.11.2023 Patentblatt 2023/46**

(21) Anmeldenummer: **22172465.1**

(22) Anmeldetag: **10.05.2022**

(51) Internationale Patentklassifikation (IPC):
***G05B 13/04*** *(2006.01)*

(52) Gemeinsame Patentklassifikation (CPC):
**G05B 13/041**; G05B 2219/45167;
G05B 2219/49099

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Ivoclar Vivadent AG
9494 Schaan (LI)**

(72) Erfinder:
• **GURSCHLER, Hannes
6700 Bludenz (AT)**

• **WELLLINGER, Christian
6714 Nüziders (AT)**
• **GANTIOLER, Andreas
6700 Bludenz (AT)**
• **REINHARDT, Jonas
7206 Igis (CH)**

(74) Vertreter: **Baldus, Oliver
Splanemann
Rumfordstrasse 7
80469 München (DE)**

(54) **ZERSPANUNGSVERFAHREN ZUM HERSTELLEN EINES DENTALOBJEKTS**

(57)    Die vorliegende Erfindung betrifft ein Zerspanungsverfahren mit den Schritten eines Bereitstellens (S101) eines Datensatzes (101) für den Fräsprozess, in dem zumindest ein Prozessparameter (103) für die Bearbeitung eines Werkstücks (105) angegeben ist; eines Simulierens (S102) einer Bearbeitungskraft auf das Werkstück (105) auf Basis des Datensatzes; und eines Anpassens (S103) der Prozessparameter (103) für die Bearbeitung, bis ein vorgegebener Maximalwert für die Bearbeitungskraft erreicht ist oder ein vorgebebener Minimalwert eingehalten wird.

Fig. 1

**Beschreibung**

Die vorliegende Erfindung betrifft ein Zerspanungsverfahren zum Herstellen eines Dentalobjekts, ein Computerprogramm für das Zerspanungsverfahren und eine Zerspanungsmaschine zum Herstellen eines Werkstücks.

Derzeit werden Frästemplates, die Fräsbahnen und die dazugehörigen Prozessparameter für einen Fräsprozess beschreiben, wie beispielsweise einen Vorschub oder eine Spindeldrehzahl, auf den schlechtesten Bearbeitungsfall (Worst Case) ausgelegt. Dieser tritt in der Realität mit einer Wahrscheinlichkeit von unter 10 Prozent auf. Daher lassen sich in diesen Verfahren zu mehr als 90 Prozent Effizienzsteigerungen realisieren. Derzeitige Frästemplates sind darum langsam.

Ansätze über Modelle die Bearbeitung zu simulieren sind ressourcenintensiv. Darüber hinaus werden ein dynamisches Verhalten der Maschine und eine Steuerung in diesen Modellen nicht berücksichtigt. Diese sind daher nicht für einen breiten Einsatz geeignet und es gibt keine Möglichkeit, auftretende Bearbeitungskräfte zu bestimmen.

Es ist die Aufgabe der vorliegenden Erfindung, einen Fräsprozess effizienter durchzuführen.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird diese technische Aufgabe durch ein Zerspanungsverfahren zum Herstellen eines Dentalobjekts gelöst, mit den Schritten eines Bereitstellens eines Datensatzes für den Fräsprozess, in dem zumindest ein Prozessparameter für die Bearbeitung eines Werkstücks angegeben ist; eines Simulierens einer Bearbeitungskraft auf das Werkstück auf Basis des Datensatzes; und eines Anpassens der Prozessparameter für die Bearbeitung, bis ein vorgegebener Maximalwert für die Bearbeitungskraft erreicht ist oder ein vorgebebener Minimalwert eingehalten wird. Die vektorielle Bearbeitungskraft kann in einer, zwei oder drei Raumrichtungen simuliert werden. Durch das Zerspanungsverfahren wird der technische Vorteil erreicht, dass das Werkstück schneller, effizienter und robuster hergestellt werden kann. Zudem werden höhere Werkzeugstandzeiten und ein geringerer Verschleiß auf der Zerspanungsmaschine erreicht.

Dadurch können Arbeitsbereiche identifiziert werden, bevor die Zerspanungsmaschine mit der Bearbeitung beginnt. Eine Bearbeitungsdatei kann optimal auf Effizienz ausgelegt werden, so dass eine Qualität, eine Bearbeitungsgeschwindigkeit und ein Verschleiß optimiert werden kann. Zudem lassen sich eine Herstellungsgenauigkeit und eine Oberflächenqualität des Werkstücks optimieren. Kraftspitzen bei der Bearbeitung können vermieden werden. Dadurch werden eine Frässpindel, ein Werkzeug sowie die ganze Zerspanungsmaschine geschont. Zudem können kleinere und günstigere Zerspanungsmaschinen verwendet werden, die die gleiche Leistungsfähigkeit wie große herkömmliche Maschinen aufweisen.

In einer technisch vorteilhaften Ausführungsform des Zerspanungsverfahrens werden die angepassten Prozessparameter in zumindest einem Datensatz gespeichert. Im Allgemeinen können die Prozessparameter auch in mehreren Datensätzen gespeichert sein. Dadurch wird beispielsweise der technische Vorteil erreicht, dass die Prozessparameter auf einfache Weise und zusammen übertragen werden können.

In einer weiteren technisch vorteilhaften Ausführungsform des Zerspanungsverfahrens werden wird die Bearbeitungskraft auf Basis eines digitalen Zwillings der Zerspanungsmaschine und/oder eines Werkstücks simuliert. Dadurch wird beispielsweise der technische Vorteil erreicht, dass sich die Bearbeitungskraft genau berechnen lässt.

In einer weiteren technisch vorteilhaften Ausführungsform des Zerspanungsverfahrens wird die Bearbeitungskraft auf Basis von Fräsbahnen für die Bearbeitung des Werkstücks simuliert. Hierbei kann die Maschinendynamik mit involviert sein oder berücksichtig werden. Dadurch wird beispielsweise der technische Vorteil erreicht, dass für jede Bewegung des Fräskopfes sich die Bearbeitungskraft berechnen lässt.

In einer weiteren technisch vorteilhaften Ausführungsform des Zerspanungsverfahrens sind die Daten für die Fräsbahnen in dem Datensatzes angegeben. Dadurch wird beispielsweise der technische Vorteil erreicht, dass die Daten für Fräsbahnen und die Prozessparameter zusammen übertragen werden können. Die

Übertragung und der Start des Zerspanungsvorganges kann durchgeführt werden, bevor die Simulation beendet ist.

In einer weiteren technisch vorteilhaften Ausführungsform des Zerspanungsverfahrens werden die Fräsbahnen angepasst, bis ein vorgegebener Maximalwert für die Bearbeitungskraft erreicht ist und/oder ein vorgegebener Minimalwert eingehalten wird. Dadurch wird beispielsweise der technische Vorteil erreicht, dass schnell zu bearbeitende Fräsbahnen erhalten werden.

In einer weiteren technisch vorteilhaften Ausführungsform des Zerspanungsverfahrens wird die Bearbeitungskraft auf das Werkstück auf Basis einer Beschleunigung, eines Vorschubes und/oder eines Schnittvolumen pro Zeit berechnet. Dadurch wird beispielsweise der technische Vorteil erreicht, dass sich die Bearbeitungskraft exakt berechnen lässt.

In einer weiteren technisch vorteilhaften Ausführungsform des Zerspanungsverfahrens wird das Simulieren auf Basis eines linearen Zusammenhangs zwischen dem Prozessparameter und der Bearbeitungskraft durchgeführt. Dadurch wird beispielsweise der technische Vorteil erreicht, dass sich die Simulation schnell und mit wenigen Schritten berechnen lässt.

In einer weiteren technisch vorteilhaften Ausführungsform des Zerspanungsverfahrens wird das Simulieren der Bearbeitungskraft während einem Bearbeiten des Werkstücks durchgeführt. Dadurch wird beispielsweise der technische Vorteil erreicht, dass das Werkzeug in Echtzeit mit verbesserten Parametern gefräst werden kann.

In einer weiteren technisch vorteilhaften Ausführungsform des Zerspanungsverfahrens wird ein Werkstück auf Basis der veränderten Prozessparameter und/oder Fräsbahnen hergestellt. Dadurch wird beispielsweise der technische Vorteil erreicht, dass sich das Werkstück effizient herstellen lässt.

In einer weiteren technisch vorteilhaften Ausführungsform des Zerspanungsverfahrens wird während der Bearbeitung des Werkstücks ein Spindelstrom gemessen und/oder eine Schnittenergie bestimmt. Der Spindelstrom korreliert mit der Bearbeitungskraft. Daher kann die Regelung aus dem Spindelstrom abgeleitet werden. Dadurch wird beispielsweise ebenfalls der technische Vorteil erreicht, dass sich die Bearbeitungskraft genau bestimmen lässt.

In einer weiteren technisch vorteilhaften Ausführungsform des Zerspanungsverfahrens wird die Bearbeitung abgebrochen, wenn der Spindelstrom und/oder die Schnittenergie einen vorgegebenen Wert übersteigt. Dadurch wird beispielsweise der technische Vorteil erreicht, dass Beschädigungen am Werkstück und der Zerspanungsmaschine verhindert werden.

In einer weiteren technisch vorteilhaften Ausführungsform des Zerspanungsverfahrens wird ein Vorschub verlangsamt oder beschleunigt, wenn der Spindelstrom und/oder die Schnittenergie und/oder Bearbeitungskraft einen vorgegebenen Wert übersteigt oder unterschreitet. Dadurch wird beispielsweise der technische Vorteil erreicht, dass die Bearbeitung des Werkstücks optimiert werden kann.

Gemäß einem zweiten Aspekt wird diese technische Aufgabe durch ein Computerprogramm gelöst, umfassend Befehle, die bei der

Ausführung des Programms durch einen Computer diesen veranlassen, das Zerspanungsverfahren nach dem ersten Aspekt auszuführen.

Gemäß einem dritten Aspekt wird diese technische Aufgabe durch eine Zerspanungsmaschine zum Herstellen eines Dentalobjekts mit einem Computerprogramm nach dem zweiten Aspekt gelöst.

Ausführungsbeispiele der Erfindung sind in den Zeichnungen dargestellt und werden im Folgenden näher beschrieben.

Es zeigen:

Fig. 1    ein Blockdiagram des Zerspanungsverfahrens;

Fig. 2    ein Diagramm der auftretenden und simulierten Bearbeitungskräfte in Abhängigkeit der Zeit;

Fig. 3    ein vergrößertes Diagramm der auftretenden und simulierten Bearbeitungskräfte in Abhängigkeit der Zeit;

Fig. 4    eine perspektivische Darstellung eines Werkstücks in einer Zerspanungsmaschine;

Fig. 5    eine weitere perspektivische Darstellung des Werkstücks;

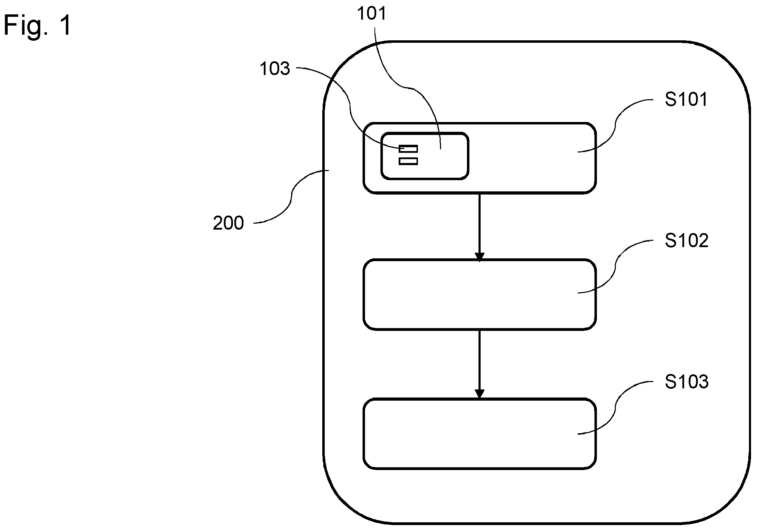

Fig. 1 zeigt ein Blockdiagram des Zerspanungsverfahrens zur Herstellung eines Dentalobjekts aus einem Werkstück. Das Zerspanungsverfahren ist ein Fertigungsverfahren, bei dem ein Drehen, Bohren, Fräsen und Schleifen durchgeführt wird. Das Dentalobjekt ist beispielsweise eine Krone, eine Brücke, ein Veneer, ein Abutment, ein Inlay, ein Onlay, eine Schiene oder eine Teil- oder Vollprothese. Im Allgemeinen kann das Dentalobjekt 101 jedes Objekt im Dentalbereich sein, das im Rahmen einer Dentalbehandlung hergestellt werden soll.

Im Schritt S101 wird ein Datensatzes 101 für den Fräsprozess bereitgestellt, in dem zumindest ein Prozessparameter 103 für die Bearbeitung eines Werkstücks 105 angegeben ist. Der Datensatz 101 kann durch eine NC-Datei gebildet sein (Numerical Control File). Die Prozessparameter können beispielsweise ein Vorschub, eine Zustellung, ein Bahnabstand und/oder eine Spindeldrehzahl sein.

Die Bearbeitungsenergie wird beispielsweise auf Basis von mehreren Faktoren berechnet, wie beispielsweise einem Fräsvolumen pro Zeit, einer Materialabhängigkeit, einer Kontaktfläche, einer Zeit, einer Spindeldrehzahl und Bearbeitungskraft.

$$u = \frac{F \cdot v_c}{a_p \cdot a_e \cdot v_f}$$

Anschließend wird in Schritt S102 eine Bearbeitungskraft auf ein Werkstück 105 auf Basis des Datensatzes simuliert. Dann wird in Schritt S103 der Prozessparameter 103 für die Bearbeitung angepasst, bis ein vorgegebener Maximalwert für die Bearbeitungskraft erreicht ist oder ein vorgebebener Minimalwert eingehalten wird. Anschließend kann das Werkstück mit den angepassten Prozessparametern hergestellt werden.

Das Zerspanungsverfahren kann auf einer Zerspanungsmaschine 200 durchgeführt werden, die das Werkstück mittels eines spanabhebenden Verfahrens bearbeitet. Mittels rotierender Schneidwerkzeuge trägt die Zerspanungsmaschine beispielsweise Material von dem Werkstück 105 zerspanend ab, um es in die gewünschte Form zu bringen.

Die Zerspanungsmaschine 200 kann zu diesem Zweck einen Computer umfassen, der einen Prozessor zum Ausführen eines entsprechenden Computerprogramms und einen digitalen Speicher zum Speichern des Computerprogramms und anderer Daten umfasst. Durch das Computerprogramm können die Schritte S101, S102 und S103 des Zerspanungsverfahrens implementiert werden. Anschließend kann das Werkstück 105 auf Basis der angepassten Prozessparameter gefräst werden. Das Werkstück 105 ist beispielsweise ein Dentalobjekt, wie eine Krone, eine Brücke, ein Veneer, ein Abutment, ein Inlay oder ein Onlay.

Die auftretende Kraft F kann aus folgender Formel berechnet werden:

$$F = \frac{u \cdot a_p \cdot v_f \cdot a_e}{v_c}$$

Die Bearbeitungsenergie u aus folgender Formel berechnet werden:

$$u = \frac{F \cdot v_c}{a_p \cdot a_e \cdot v_f}$$

Hierbei ist u die Schleifenergie in J/mm³, F die Bearbeitungskraft als Vektor im Raum in N, $v_c$ die Schnittgeschwindigkeit in m/min, $a_p$ die Zustellung in Z-Richtung in mm, $a_e$ die Zustellung in X-Richtung in mm und $v_f$ die Vorschubgeschwindigkeit in mm/min. Auf Basis dieser Formeln kann eine Vorhersage der auftretenden Bearbeitungskraft durchgeführt werden und Anpassung der Prozessparameter berechnet werden.

$$F = \frac{12[\frac{J}{mm^3}] \cdot 0,02[mm] \cdot 1500[\frac{mm}{min}] \cdot 13[mm]}{471,238\,[\frac{mm}{min}]} = 9,52[N]$$

$$v_f = \frac{25[N] \cdot 471,238[\frac{mm}{min}]}{12[\frac{J}{mm^3}] \cdot 0,02[mm] \cdot 13[mm]} = 3775,9[\frac{mm}{min}]$$

Durch das Zerspanungsverfahren können die Prozessparameter zu jedem Zeitpunkt in der Bearbeitung aus einer CAM-Datei, einer NC-Datei, einem digitalen Zwilling und/oder der Maschine extrahiert und verarbeitet werden, sodass eine Vorhersage der auftretenden Bearbeitungszustände gemacht werden kann und die Prozessparameter auf ein Optimum geändert werden können.

Es kann jeweils nur ein Parameter oder alle Parameter angepasst werden, um die Belastung zu regulieren. Im Allgemeinen ist hierbei die Anpassung aller Parameter möglich.

Der Fräsprozess kann im optimalen Bereich gefahren werden, d.h. so schnell wie möglich und mit dem geringsten Verschleiß. Die Anpassung kann sensorlos und/oder durch Messen der Leistung der Bearbeitungsspindel erfolgen, in der ein Stromsensor integriert ist. Der Fräsprozess wird vorab für ein bestimmtes Design voroptimiert und wird danach mit dem aktuellen Zustand der Fräse korrigiert.

Diese Informationen können aus einer CAM- oder NC-Datei für jeden Zeitpunkt der Bearbeitung extrahiert werden. Zudem ist es möglich, den Fräsprozess mithilfe eines digitalen Zwillings zu simulieren. Dabei werden die Dynamikparameter, wie beispielsweise Beschleunigungen oder Vorschübe, zu jedem Zeitpunkt simuliert und die entstehende Bearbeitungszustand vorhergesagt. Die Simulation des digitalen Zwillings kann zeitlich nicht nur vor dem Zerspanungsprozess durchgeführt werden, sondern auch während des Zerspanungsprozesses berücksichtigt werden.

Damit ist es möglich, die NC-Datei vorab auf eine minimale Bearbeitungszeit, einen minimalem Werkzeugverschleiß, eine maximale Genauigkeit und/oder eine maximale Oberflächenqualität zu optimieren. Dies kann in der CAM-Software durchgeführt werden und in der NC-Datei gespeichert werden. Dabei findet eine Kommunikation zwischen der CAM-Software und der Zerspanungsmaschine (CNC - Computerized Numerical Control) statt. Diese kann in Echtzeit realisiert werden. Dabei sendet die CAM-Software Datenpakete zu der Zerspanungsmaschine, die entsprechend angepasst werden können. Die Anpassung wird in der CAM-Software berechnet und in der Zerspanungsmaschine umgesetzt.

Auf der Zerspanungsmaschine kann derselbe Algorithmus laufen, der aber zusätzlich mit dem Spindelstrom als Eingangsgröße trainiert ist. Mit den aktuellen Werten auf der Maschine und dem Spindelstrom kann das Modell dann die aktuell auftretende Kraft vorhersagen.

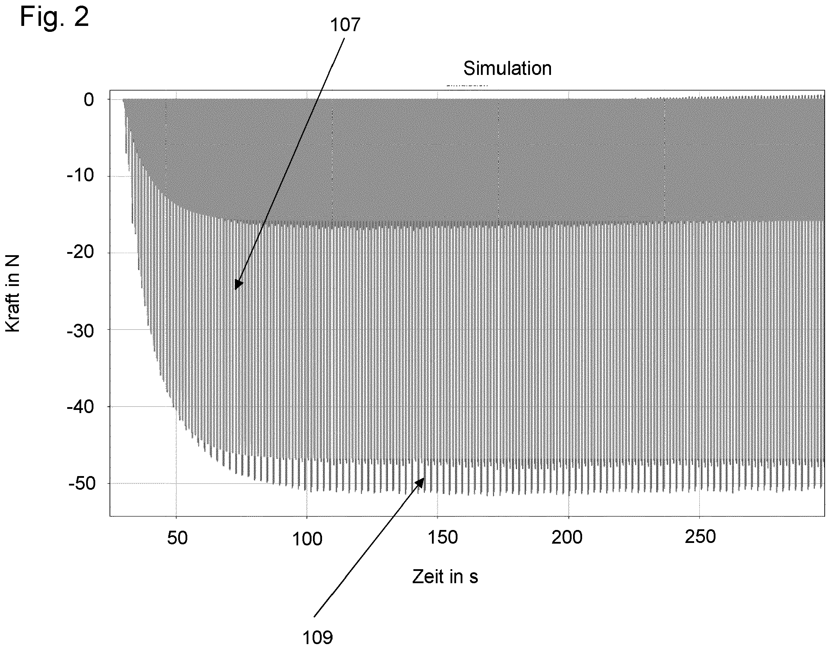

Fig. 2 zeigt ein Diagramm der auftretenden und simulierten Bearbeitungskräfte in Abhängigkeit der Zeit für eine Vielzahl von Fräsbahnen. Über die Prozessparameter ist es möglich, die auftretenden Bearbeitungskräfte anhand der Simulation vorherzusagen.

Als Linie 109 ist die gemessene Bearbeitungskraft gezeigt. Als Linie 107 ist die Bearbeitungskraft gezeigt, die mithilfe des Algorithmus vorhergesagt worden ist. Ein lineares Modell (Lineare Regression) wurde trainiert, mit dem die Bearbeitungskraft über die Prozessparameter mit einem geringen Rechenaufwand vorhergesagt werden kann.

Auf der Zerspanungsmaschine kann derselbe Algorithmus laufen, der aber zusätzlich mit dem Spindelstrom als Eingangsgröße trainiert ist. Mit den aktuellen Werten auf der Zerspanungsmaschine und dem Spindelstrom kann das Modell dann die aktuell auftretende Kraft vorhersagen. Dadurch können ungeplante Probleme festgestellt werden und entsprechend reagiert werden. Somit kann ein optimaler Fräs- Schleifprozess zu jedem Zeitpunkt garantiert werden.

In diesem Fall wird ein kleines und unausgeglichenes Datenpaket zum Trainieren des Modells verwendet. Die Vorhersage ist auf 89 bis 90% genau.

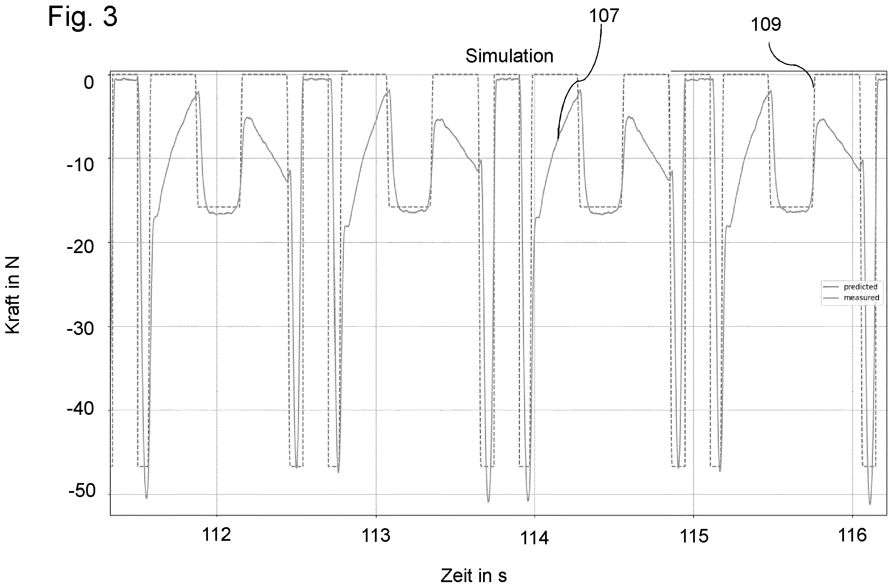

Fig. 3 zeigt ein vergrößertes Diagramm der auftretenden und simulierten Bearbeitungskräfte in Abhängigkeit der Zeit für wenige Fräsbahnen. Die Abweichungen zwischen der simulierten Bearbeitungskraft 107 (gestrichelte Linie) und der gemessenen Kraft 109 (durchgezogene Linie) der Fräsbahnen ist gering.

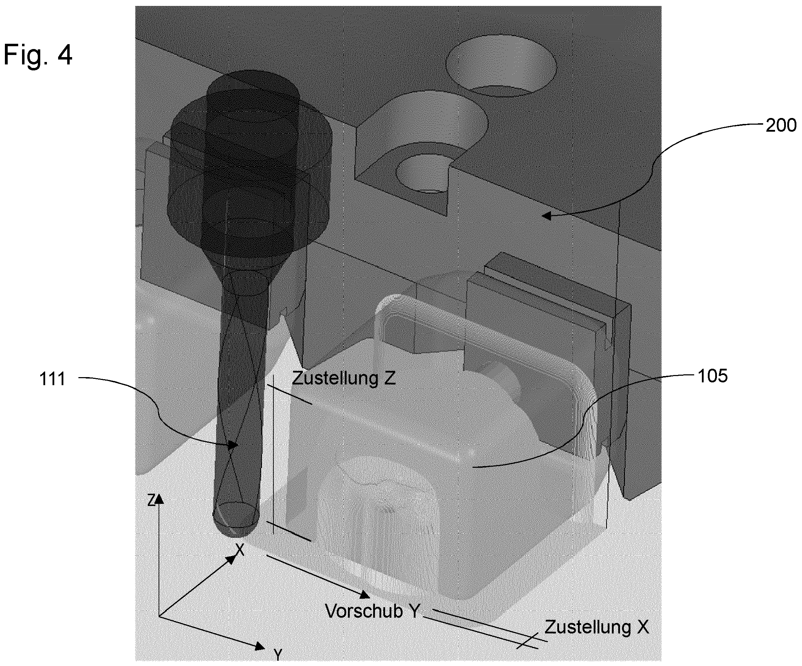

Fig. 4 zeigt eine perspektivische Darstellung eines Werkstücks 105 in einer Zerspanungsmaschine 200 mit einem Fräskopf 111. Zudem sind ein zugehöriges Koordinatensystem und die Zustellung in x- und z-Richtung sowie der Vorschub in y-Richtung gezeigt.

Das Werkstück 105 wird beispielsweise den Prozessparametern einer Spindeldrehzahl von 50.000 U/min, einem Bahnabstand von 0,1 mm und einem Vorschub von 2500 mm/min erzeugt. Dabei wird das Ziel verfolgt, dass eine konstante Bearbeitungskraft von 50 N über die gesamte Bearbeitung angewendet wird. Die Bearbeitung erfolgt beispielsweise durch ein KI-Fräsen.

Es existiert ein direkter Zusammenhang zwischen Prozessparameter und Bearbeitungskraft. Der Zusammenhang ist größtenteils linear, wobei jedoch jeder Parameter unterschiedliche Einflüsse auf den auftretenden Bearbeitungszustand hat. Diese variieren während einem Fräsprozess ständig und sind nie konstant.

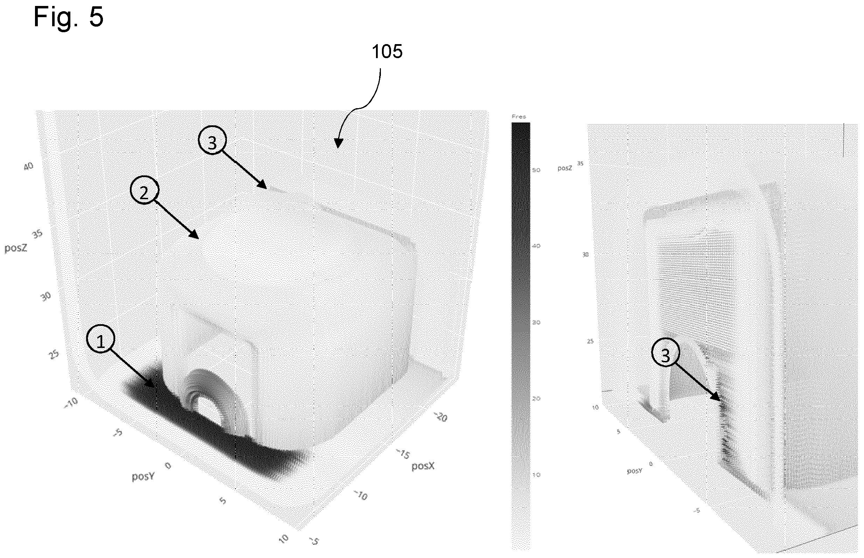

Fig. 5 zeigt eine weitere perspektivische Darstellung des Werkstücks 105. Während der Bearbeitung können beispielsweise drei unterschiedliche Situationen 1, 2, und 3 vorliegen.

Situation 1:

In dieser Situation ist die Bearbeitungskraft zu diesem Zeitpunkt hoch:

$$F = \frac{12[\frac{J}{mm^3}] \cdot 0,1[\text{mm}] \cdot 2500[\frac{mm}{min}] \cdot 13[mm]}{471,238[\frac{mm}{min}]} = \mathbf{82,76[N]}$$

$$v_f = \frac{50[N] \cdot 471,238[\frac{mm}{min}]}{12[\frac{J}{mm^3}] \cdot 0,1[\text{mm}] \cdot 13[mm]} = 1510,38[\frac{mm}{min}]$$

Die Belastung von 83 N ist über einem vorgegebenen Maximalwert. Daher werden die Prozessparameter so gewählt, dass sich die

Belastung auf 50 N verringert. Eine Möglichkeit ist es, den Betriebsparameter für den Vorschub anzupassen. Wenn dieser Betriebsparameter freigestellt und die gewünschte Belastung eingefügt wird, ergibt sich ein angepasster neuer Vorschub, mit dem die Bearbeitung in diesem Bereich erfolgt, um die gewünschte Kraft von 50 N zu erreichen.

Der Betriebsparameter für den Vorschub wird von 2500 mm/min auf 1510 mm/min verringert.

Situation 2:

In dieser Situation ist die Bearbeitungskraft zu diesem Zeitpunkt gering:

$$F = \frac{12[\frac{J}{mm^3}] \cdot 0,1[\text{mm}] \cdot 2500[\frac{mm}{min}] \cdot 4[mm]}{471,238\,[\frac{mm}{min}]} = \mathbf{25,46[N]}$$

$$v_f = \frac{50[N] \cdot 471,238[\frac{mm}{min}]}{12[\frac{J}{mm^3}] \cdot 0,1[mm] \cdot 4[mm]} = 4908,73[\frac{mm}{min}]$$

Die Belastung von 25 N ist unter einem vorgegebenen Minimalwert. Daher werden die Prozessparameter so gewählt, dass sich die Belastung auf 50 N erhöht. Eine Möglichkeit ist es, den Betriebsparameter für den Vorschub anzupassen. Wenn dieser Betriebsparameter freigestellt und die gewünschte Belastung eingefügt wird, ergibt sich ein angepasster neuer Vorschub, mit dem die Bearbeitung in diesem Bereich erfolgt, um die gewünschte Kraft von 50 N zu erreichen. Der Betriebsparameter für den Vorschub wird von 2500 mm/min auf 4908 mm/min erhöht.

Situation 3:

In dieser Situation ist die Bearbeitungskraft zu diesem Zeitpunkt wieder hoch:

$$F = \frac{12[\frac{J}{mm^3}] \cdot 0,1[\text{mm}] \cdot 2500[\frac{mm}{min}] \cdot 11[mm]}{471,238\,[\frac{mm}{min}]} = \mathbf{70[N]}$$

$$v_f = \frac{50[N] \cdot 471,238[\frac{mm}{min}]}{12[\frac{J}{mm^3}] \cdot 0,1[mm] \cdot 11[mm]} = 1784,99[\frac{mm}{min}]$$

Die Belastung von 70 N ist erneut über einem vorgegebenen Maximalwert. Daher werden die Prozessparameter so gewählt, dass sich die Belastung auf 50 N verringert. Eine Möglichkeit ist es, den Betriebsparameter für den Vorschub anzupassen. Wenn dieser Betriebsparameter freigestellt und die gewünschte Belastung eingefügt wird, ergibt sich ein angepasster neuer Vorschub, mit dem die Bearbeitung in diesem Bereich erfolgt, um die gewünschte Kraft von 50 N zu erreichen. Der Betriebsparameter für den Vorschub wird von 2500 mm/min auf 1785 mm/min verringert.

In diesen Beispielen wird der Vorschub als zu regelnde Größe verwendet. Jedoch kann nach dem gleichen Prinzip auch andere Betriebsparameter, wie beispielsweise Bahnabstand und/oder Spindeldrehzahl verändert werden, um die gewünschte Belastung zu erreichen. Die Regelung kann hierbei stufenlos erfolgen. Hierzu kann eine Fräsbahn in der CAM-Software verändert werden. Die Anpassung geschieht mittels einer Simulation in der CAM-Software oder Informationen in der CAM-Software für die Bahnberechnung. Je Tiefer ein Fräsbohrer in das Werkstück 105 eindringt, desto höher ist die Bearbeitungskraft.

Die Analyse kann auf Basis von vektoriellen Bearbeitungskräften, einer eindimensionalen Bearbeitungskraft oder einer Spindellast durchgeführt werden. Eine vektorielle Kraft ist eine Kraft mit Betrag und Raumrichtung. Demgegenüber ist die Spindellast eine skalare Größe.

Ein Algorithmus auf Basis von künstlicher Intelligenz kann verschiedene Belastungen vorhersagen, die nicht durch eine analytische Lösung abgedeckt werden. Beispielsweise, wenn ein Werkzeug aus dem Material steigt oder in dieses Material einsticht oder bei einem Kraftaufbau am Anfang des Bearbeitungsauftrags.

Auf diese Weise ist es ohne hohen Rechenaufwand und Mehrkosten möglich, die Bearbeitung des Werkstücks 105 auf maximale Effizienz zu optimieren. Die auftretende Bearbeitungskraft kann mithilfe eines selbstlernenden Algorithmus (Machine Learning Algorithmus) auf Basis der Prozessparameter und des Materials des Werkstückes 105 vorhergesagt werden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

BEZUGSZEICHENLISTE

101 Datensatz
103 Prozessparameter
105 Werkstück
107 Simulierte Kraft der Fräsbahnen
109 Gemessene Kraft der Fräsbahnen
111 Fräskopf
200 Zerspanungsmaschine

**Patentansprüche**

1. Zerspanungsverfahren zum Herstellen eines Dentalobjekts, mit den Schritten:

   - Bereitstellen (S101) eines Datensatzes (101) für den Fräsprozess, in dem zumindest ein Prozessparameter (103) für die Bearbeitung eines Werkstücks (105) angegeben ist;
   - Simulieren (S102) einer Bearbeitungskraft auf das Werkstück (105) auf Basis des Datensatzes; und
   - Anpassen (S103) der Prozessparameter (103) für die Bearbeitung, bis ein vorgegebener Maximalwert für die Bearbeitungskraft erreicht ist oder ein vorgebebener Minimalwert eingehalten wird.

2. Zerspanungsverfahren nach Anspruch 1, wobei die angepassten Prozessparameter in zumindest einem Datensatz (101) gespeichert werden.

3. Zerspanungsverfahren nach einem der vorangehenden Ansprüche, wobei die Bearbeitungskraft auf Basis eines digitalen Zwillings der Zerspanungsmaschine (200) und/oder eines Werkstücks (105) simuliert wird.

4. Zerspanungsverfahren nach einem der vorangehenden Ansprüche, wobei die Bearbeitungskraft auf Basis von Fräsbahnen für die Bearbeitung des Werkstücks (105) simuliert wird.

5. Zerspanungsverfahren nach Anspruch 4, wobei die Daten für die Fräsbahnen in dem Datensatzes angegeben sind.

6. Zerspanungsverfahren nach Anspruch 4 oder 5, wobei die Fräsbahnen angepasst werden, bis ein vorgegebener Maximalwert für die Bearbeitungskraft erreicht ist und/oder ein vorgegebener Minimalwert eingehalten wird.

7. Zerspanungsverfahren nach einem der vorangehenden Ansprüche, wobei die Bearbeitungskraft auf das Werkstück (105) auf Basis einer Beschleunigung, eines Vorschubes und/oder eines Schnittvolumens pro Zeit berechnet wird.

8. Zerspanungsverfahren nach einem der vorangehenden Ansprüche, wobei das Simulieren auf Basis eines linearen Zusammenhangs zwischen dem Prozessparameter und der Bearbeitungskraft durchgeführt wird.

9. Zerspanungsverfahren nach einem der vorangehenden Ansprüche, wobei das Simulieren der Bearbeitungskraft während einem Bearbeiten des Werkstücks (105) durchgeführt wird.

10. Zerspanungsverfahren nach einem der vorangehenden Ansprüche, wobei ein Werkstück (105) auf Basis der veränderten Prozessparameter und/oder Fräsbahnen hergestellt wird.

11. Zerspanungsverfahren nach Anspruch 10, wobei während der Bearbeitung des Werkstücks (105) ein Spindelstrom gemessen wird und/oder eine Schnittenergie bestimmt wird.

12. Zerspanungsverfahren nach Anspruch 11, wobei die Bearbeitung abgebrochen wird, wenn der Spindelstrom und/oder die Schnittenergie einen vorgegebenen Wert übersteigt.

13. Zerspanungsverfahren nach Anspruch 11, wobei ein Vorschub verlangsamt oder beschleunigt wird, wenn der Spindelstrom und/oder die Schnittenergie und/oder die Bearbeitungskraft einen vorgegebenen Wert übersteigt oder unterschreitet.

14. Computerprogramm, umfassend Befehle, die bei der Ausführung des Programms durch einen Computer diesen veranlassen, das Zerspanungsverfahren nach einem der Ansprüche 1 bis 13 auszuführen.

15. Zerspanungsmaschine (200) zum Herstellen eines Dentalobjekts mit einem Computerprogramm nach Anspruch 14.

Fig. 1

Fig. 2

Kraft in N

Simulation

107

109

Zeit in s

Fig. 3

EP 4 276 549 A1

Fig. 4

200

105

111

Zustellung Z

Z

X

Vorschub Y

Zustellung X

Y

EP 4 276 549 A1

Fig. 5

Europäisches
Patentamt

European
Patent Office

Office européen
des brevets

# EUROPÄISCHER RECHERCHENBERICHT

**Nummer der Anmeldung**

**EP 22 17 2465**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SAPTAJI KUSHENDARSYAH ET AL: "Machining of biocompatible materials: a review", THE INTERNATIONAL JOURNAL OF ADVANCED MANUFACTURING TECHNOLOGY, SPRINGER, LONDON, Bd. 97, Nr. 5, 10. Mai 2018 (2018-05-10), Seiten 2255-2292, XP036536773, ISSN: 0268-3768, DOI: 10.1007/S00170-018-1973-2 [gefunden am 2018-05-10] | 1,2,4-15 | INV. G05B13/04 |
| Y | * Abschnitt 4.2 * ----- | 3 | |
| Y | CN 113 468 690 A (UNIV TIANJIN COMMERCE; INNER MONGOLIA UNIV FOR NATIONALITIES) 1. Oktober 2021 (2021-10-01) * Zusammenfassung * ----- | 3 | |
| A | DOBRZANSKI LESZEK A. ET AL: "Dentistry 4.0 Concept in the Design and Manufacturing of Prosthetic Dental Restorations", PROCESSES, Bd. 8, Nr. 5, 29. April 2020 (2020-04-29), Seiten 1-52, XP55967304, DOI: 10.3390/pr8050525 Gefunden im Internet: URL:https://www.mdpi.com/2227-9717/8/5/525 /htm> [gefunden am 2022-10-03] * das ganze Dokument * ----- | 1-15 | |

**RECHERCHIERTE SACHGEBIETE (IPC)**

G05B

Der vorliegende Recherchenbericht wurde für alle Patentansprüche erstellt

| Recherchenort | Abschlußdatum der Recherche | Prüfer |
|---|---|---|
| Den Haag | 6. Oktober 2022 | Lefeure, Guillaume |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 17 2465

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-10-2022

| Im Recherchenbericht angeführtes Patentdokument | Datum der Veröffentlichung | Mitglied(er) der Patentfamilie | Datum der Veröffentlichung |
|---|---|---|---|
| CN 113468690 A | 01-10-2021 | KEINE | |

Für nähere Einzelheiten zu diesem Anhang : siehe Amtsblatt des Europäischen Patentamts, Nr.12/82

EPO FORM P0461